# EUROPÄISCHE PATENTSCHRIFT

(11) **EP 0 459 084 B1**
(45) Veröffentlichungstag und Bekanntmachung des Hinweises auf die Patenterteilung: **19.07.1995**
(21) Anmeldenummer: 91102292.9
(22) Anmeldetag: 18.02.1991
(51) Int. Cl.: E06B 3/10, E06B 3/68, E06B 3/96

(54) **Bausatz für Fenster**
Kit for the construction of windows
Jeu d'éléments pour la construction de fenêtres

(30) Priorität: 31.05.1990 DE 4017608
(43) Veröffentlichungstag der Anmeldung: 04.12.1991
(73) Patentinhaber: HAMPEL-ZÖLLNER, Gesellschaft für klassisches Fenster-Design mbH, D-86391 Stadtbergen (DE)
(72) Erfinder: Hampel-Zöllner, W-8901 Leitershofen (DE)
(74) Vertreter: Alber, Norbert

(56) Entgegenhaltungen:
- WO-A-81/00589
- DE-B- 1 060 126
- DE-U- 8 710 429
- FR-A- 1 399 953
- FR-A- 2 258 511
- FR-A- 2 327 382
- GB-A- 1 582 560

## Beschreibung

Die Erfindung betrifft einen Bausatz für Holzfenster, und zwar für solche Fenster, die aus einem Stock bestehen, welcher fest mit dem Gebäude verankert wird und wenigstens einem, einfachen oder doppelten Fensterflügel, welche am Stock angelenkt und um eine senkrechte Achse verschwenkbar sind.

Holzfenster für Neubauten werden heute - ebenso wie Kunststoff und Metallfenster - in aller Regel in großen Stückzahlen industriell hergestellt und in einbaufertigem Zustand, einschließlich wenigstens der Grundierung und Verglasung verkauft, wie z.B. der FR-A 22 58 511 entnehmbar. Daraus ergeben sich Preisvorteile für den Käufer, jedoch andererseits der Nachteil, daß wegen des Zwanges zu hohen Stückzahlen nur eine begrenzte Auswahl an unterschiedlichen Typen und Gestaltungsvarianten verfügbar ist.

Andererseits besteht ein Bedarf an Fenstern, die hinsichtlich ihrer Dimensionierung und Abmessung beispielsweise an historische Vorbilder angelehnt sind, und entweder für Neubauten vorgesehen werden oder auch bei der Renovierung von alten, insbesondere denkmalgeschützten, Bauten verwendet werden sollen. Da solche Fenster gerade nicht in großen Stückzahlen benötigt werden und sich somit eine industrielle Fertigung nicht lohnt, und auch mit Serienwerkzeugen nicht möglich ist, müssen derartige Fenster bisher in Kleinserien oder Einzelfertigung erstellt werden, so daß diese gegenüber den Großserienprodukten sehr viel teurer kommen. Aus diesem Grund wird trotz der ästhetischen und stilmäßigen Nachteile dennoch oft eine Wahl zu Gunsten der billigeren Großserienprodukte getroffen.

Gerade die historischen Fenster orientierten sich jedoch - trotz unterschiedlicher absoluter Abmessungen - oft am Wiederholen einer bestimmten Dimensionierung, beispielsweise eines bestimmten Verhältnisses von Höhe zu Breite etc.. Als Beispiel mag hier das sogenannte Süddeutsche Fenster gelten, welches von einer einzelnen Glasscheibenfläche von etwa 34 x 34 cm ausgeht und dieses als Rastermaß verwendet, unabhängig davon, ob das Fenster insgesamt nur ein Raster breit und drei Raster hoch oder zwei Raster breit und nur ein Raster hoch ist.

Bei derartigen Fenstern werden weiterhin an Bauformen unterschieden solche mit oder ohne Kämpfer, also einer zusätzlichen, quer verlaufenden Strebe des Stockes, welches sich zwischen zwei Glaselementen befindet sowie die Varianten mit senkrechtem Mittelholz, welches fest mit dem Stock verbunden ist oder ohne, also die Bauform mit überlappenden, sogenannten Stulpflügeln. Bei nur einem Fensterflügel ist ein Mittelholz selbstverständlich nicht möglich. Weiterhin muß dann unterschieden werden, ob es sich um einfache oder doppelte Fensterflügel handelt, also ob sich u.U. zwei Flügel hintereinander befinden, wodurch ein Doppelfenster mit besserer Isolierwirkung durch zwei hintereinanderliegende Scheiben mit Luftpolster dazwischen entsteht. Dabei ist in aller Regel das zusätzliche, das sogenannte Winterfenster, am immer vorhandenen Sommerfenster angelenkt und befestigt.

Es ist daher die Aufgabe der vorliegenden Erfindung, einen Bausatz zu schaffen, der derartige, an historische Vorbilder meist angelehnte, Bauformen mit einem Minimum an unterschiedlichen Einzelteilen ermöglicht, deren Montage zusätzlich so einfach ist, daß sie nicht unbedingt von Fachleuten vorgenommen werden muß, sondern auch von geschickten Laien und je nach der gewünschten Bauform vorgenommen werden kann.

Diese Aufgabe ist durch die kennzeichnenden Merkmale des Anspruchs 1 gelöst. Vorteilhafte Lösungen ergeben sich aus den Unteransprüchen.

Ein derartiger Bausatz, bei dem der Fensterstock in Einzelteilen geliefert wird und die Fensterflügel in Einzelteilen, ggfs. als fertige Rahmen ohne Verglasung und ohne eventuelle Quersprossen geliefert werden und auch noch keine Oberflächenbehandlung des Fensters vorgenommen ist, bietet den Vorteil, daß für den Hersteller und Händler nur eine sehr beschränkte Lagerhaltung notwendig ist, da nur eine geringe Anzahl unterschiedlicher Teile hergestellt und auf Lager gehalten werden muß, und nicht die große Anzahl unterschiedlicher, hieraus durch Zusammenbau möglicher fertiger Fenster. Ebensowenig müssen für die Montage sonst notwendige Maschinen ständig auf die neue Bauform bzw. neue Fenstergröße umgestellt werden.

Daraus wiederum ergibt sich ein Kostenvorteil, der bewirkt, daß auch an historischen Bauformen orientierte Fenster, insbesondere Fensterbauarten gemäß dem DE-GM 87 10 429.6 nur noch unwesentlich über den Preis von industriell gefertigten Fenstern liegen.

Beim Fertigungsgrad des verkauften Bausatzes ist es das Ziel, gerade diejenigen Arbeitsgänge dem Käufer zu überlassen, die entweder sehr arbeitszeitintensiv sind oder durch industrielle Vorwegnahme die Anzahl der unterschiedlich herstellbaren Varianten stark einschränken. Gleichzeitig müssen die vom Käufer durchzuführenden Arbeiten sehr einfach gestaltet sein.

Falls der Käufer ein Schreiner oder Fensterbauer ist, müssen die Anforderungen an den Zusammenbau an deren maschinelle Möglichkeiten angepaßt sein. Damit wird diesen Kreisen die Möglichkeit gegeben, individuelle Fenster anzubieten und zu montieren, ohne einen großen Maschinenpark zu benötigen.

Aus diesem Grund wird insbesondere der Stock des Fensters in Einzelteilen geliefert, also die äußeren, senkrechten Setzhölzer, die waagerecht oben und unten verlaufenden Schenkel und eventuell zusätzlich ein - bei mehrflügeligen Fenstern - senkrecht stehendes Mittelholz sowie eventuell waagerecht zwischen den Setzhölzern bzw. einem Mittelholz und einem Setzholz verlaufende, sogenannte Kämpfer.

Beispielsweise bei der klassischen süddeutschen Fensterbauform werden Fenster bis zu drei Höhen Rastern und bis zu zwei Breiten Rastern benötigt, was insgesamt, allein von der Größenrasterung her, bereits sechs verschiedene Varianten bedeutet. Zählt man noch die Möglichkeit mit/ohne Mittelholz und jeweils mit/ohne einem oder zwei Kämpfern hinzu, so ergeben sich daraus bereits annähernd 20 verschiedene Varianten, und zusätzlich kommen dann noch die Untervarianten hinzu, die sich durch unterschiedliche Oberflächenbehandlung und unterschiedliche Art der Fenstersprossen zwischen den einzelnen Scheiben, also Holzsprossen oder Metallsprossen, und unterschiedliche Beschläge ergeben.

Für diese in der Größenordnung von etwa 50 unterschiedlichen Varianten liegenden Möglichkeiten müssen hinsichtlich der Teile des Stockes nur Setzhölzer und Mittelhölzer in ein zwei oder drei Höhenraster-Einheiten bevorratet werden sowie Schenkel und Kämpfer in ein und zwei Breiten-Einheiten. Dabei muß sichergestellt werden, daß die Setzhölzer und Mittelhölzer sowohl für Fenster mit als auch ohne Kämpfer verwendet werden können. Ebenso muß bei den waagerecht verlaufenden Schenkeln sichergestellt sein, daß diese für Fenster mit als auch ohne Mittelholz verwendet werden können.

Weiterhin muß auch nach längerer Lagerhaltung dieser Einzelteile ein problemloser Zusammenbau, also Verleimen und eventuell Verschrauben der Teile zu einem Stock möglich sein. Da es sich um Massivholz handelt, welches während der Lagerung noch arbeitet, also sich hinsichtlich der Form und Dimensionierung ändern kann, sind geeignete Verbindungsformen vorzusehen. Beispielsweise scheidet das bei industriell hergestellten Fenstern verwendete Verbinden durch sogenannte Minizinken aus. Dabei handelt es sich um Stoßverbindungen, wobei die beiden Verbindungsflächen ein tief eingeschnittenes, sehr steiles Zickzackprofil aufweisen, welches durch Fräsen erzeugt wird. Eine einzelne solche Nut ist nur wenige Millimeter breit, jedoch mehrere Zentimeter tief. Eine derartige Minizinkenverbindung muß unmittelbar nach dem Fräsen zusammengefügt und verleimt werden, da bereits kurze Zeiträume ausreichen, um einen Verzug des Holzes in einem solchen Maße zu bewirken, daß diese sehr klein dimensionierten Minizinken nicht mehr exakt ineinander passen.

Für den vorliegenden Bausatz ist daher eine Schlitz-und-Zapfen-Verbindung mit mindestens Doppelzapfen verwendet. Ebenso sitzen Mittelholz und Kämpfer mittels einer sehr groben Zapfenverbindung in den sie tragenden anderen Holzteilen.

Aufgrund der groß dimensionierten Gestaltung der Verbindungen zwischen den einzelnen Teilen des Stockes ist auch ein geringfügiger, während der Lagerung der Einzelteile erfolgter Verzug zu verkraften. Zusätzlich ist bei einer solchen Gestaltung der Verbindung ein Zusammenfügen auch von einem Laien und ohne Spezialwerkzeug möglich, um eine dauerhafte Verleimung zu erzielen. Zusätzlich kann ein Holznagel in die Verbindung eingebracht werden, um diese zusätzlich zu stabilisieren.

Die Fensterflügel werden ggfs. als fertige Rahmen ausgeliefert. Die senkrechte, anschlagende Leiste ist unterschiedlich gestaltet, je nachdem, ob - bei einem zweiflügeligen Fenster - die beiden Flügel an einem Mittelholz anliegen sollen oder ohne Mittelholz gegenseitig überlappen als sogenannte Stulpflügel. Für diesen Zweck sind diese, den Scharnieren abgewandten senkrechten Teile zwar unterschiedlich zu gestalten, erlauben aber die Verwendung ansonsten gleicher Teile für den Rahmen des Fensterflügels. Auch dieser Rahmen des Fensterflügels ist von der Oberfläche her noch nicht oder zumindest nicht endgültig behandelt.

Der Kunde hat nun die Wahl, in diesen Fensterflügel die von ihm gewünschte Glasart einzusetzen und auch das Material für die Sprossen nach seinem Geschmack zu wählen, also Holzsprossen oder Metallsprossen zu verwenden. In beiden Fällen muß die senkrechte Strebe des Flügels nicht verändert, also gefräst oder auf sonstige Art vorbearbeitet werden. Die Sprossen werden durch verklemmen und das Verkitten oder Verfugen mit Silicon gegenüber der Glasscheibe gehalten. Bei zweiteiligen Sprossen, bei denen sich jeder Teil der Sprosse auf gegenüberliegenden Seiten der Scheibe befindet, rasten diese beiden Teile zusätzlich ineinander. Sie können hilfsweise auch zusätzlich miteinander mittels Stiften verbunden werden.

Eine Ausführungsform gemäß der Erfindung ist im folgenden anhand der Figuren beispielhaft näher beschrieben. Es zeigen:
- Fig. 1: die Vorderansicht eines Fensters mit einem Mittelholz, wobei die linke Hälfte einen durchgehenden Flügel zeigt, die rechte Seite dagegen durch einen Kämpfer unterteilt ist,
- Fig. 2: einen waagerechten Schnitt durch ein zweiflügeliges Fenster mit Doppelflügel und Mittelholz,
- Fig. 3: einen senkrechten Schnitt durch die rechte Seite des Fensters gemäß Fig. 1,
- Fig. 4: einen waagerechten Schnitt durch ein geschlossenes Stulpflügelfenster,
- Fig. 5: einen Schnitt durch eine Bleisprosse,
- Fig. 6: eine senkrechte Aufsicht auf die Verbindung einer Holzsprosse mit dem Rahmen des Fensterflügels,
- Fig. 7: eine Eckverbindung zwischen Schenkel und Setzholz und
- Fig. 8: einen Schnitt durch eine Eisensprosse.

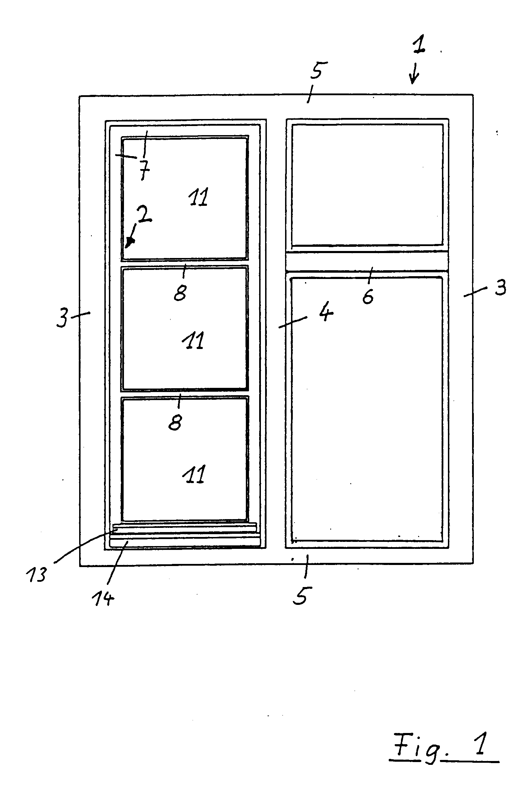

Fig. 1 zeigt ein fertig montiertes Fenster. Der Stock 1 besteht in diesem Falle aus den beiden senkrechten Höhenschenkeln 3 sowie oberem und unterem Schenkel 1 und einem in der Mitte senkrecht verlaufenden Setzholz 4.

Während in der linken Hälfte der Darstellung ein Fensterflügel 2 in das Fenster eingesetzt ist, ist die rechte Hälfte des Fensters offen. Dort befindet sich - im Gegensatz zur linken Hälfte - ein waagerechter Kämpfer 6 zwischen dem senkrechten Setzholz 4 und dem senkrechten äußeren Höhenschenkel 3, welches ebenfalls zum Stock 1 gehört und mit diesem fest verbunden ist. Der Fensterflügel 2 in der linken Bildhälfte besteht aus dem Rahmen 7 und den drei einzelnen Glasscheiben 11, zwischen denen sich die Holzsprossen 8 befinden, die mit dem Rahmen 7 des Fensterflügels 2 verbunden sind, wie im folgenden näher dargestellt. Am unteren Rand des Fensterflügels 2 ist der Wetterschenkel 13 zu erkennen der ein fester Teil des Rahmens 7 des Fensterflügels 2 ist und vorzugsweise einstückig mit diesem ausgebildet ist. Der untere Blendrahmen-Wetterschenkel 14 gehört zum Stock.

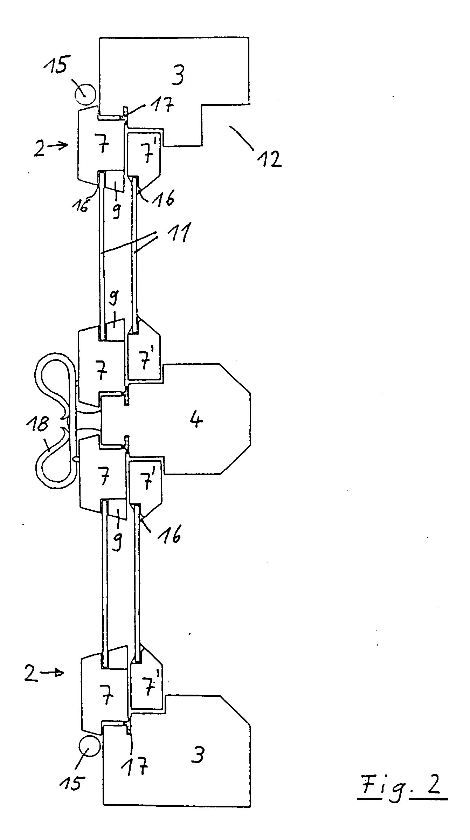

Fig. 2 zeigt einen waagerechten Schnitt etwa in der Mitte einer der Glasscheiben 11. Jeder der beiden Fensterflügel 2 ist über ein symbolisch dargestelltes Scharnier 15 am äußeren Höhenschenkel 3 anglenkt. Bei den Fensterflügeln 2 handelt es sich in diesem Fall um doppelte Fensterflügel, wobei der außen liegende Rahmen 7' am innen liegenden Rahmen lösbar befestigt ist (nicht dargestellt) oder nach DE-P 36 37 495 zusätzlich abgedichtet und mit Gas verfüllt wird. Sowohl die äußeren Rahmen 7' als auch die inneren Rahmen 7 der Fensterflügel 2 liegen in entsprechenden rechtwinkligen Falzen des Stockes, also der Setzhölzer 3 und des Mittelholzes 4. Dabei sind lediglich die inneren Rahmen 7 mittels Profildichtungen 17 bzw. Schlauchdichtungen gegenüber dem Stock abgedichtet, so daß also zwischen dem äußeren Rahmen 7' und dem Stock sowie dem inneren Rahmen 7 ein Luftspalt 2 mm bestehen bleibt.

Fig. 2 zeigt ferner, wie die Scheiben 11 in den Rahmen 7 bzw. 7' im fertig montierten Zustand gehalten werden: Während die Scheiben 11 im inneren Rahmen 7 in einem Falz mit rechtwinkligem Querschnitt von außen her eingelegt sind und dort durch Halteleisten 9 gehalten werden, liegen die Scheiben 11 des äußeren Rahmens 7' in einem Falz, in den sie von innen her eingelegt werden und dort durch die verwendete Dichtmasse wie etwa das Silicon 16 gehalten werden und ggfs. mechanisch durch Glaserecken 19.

Während in Fig. 2 beim Höhenschenkel 3 im oberen Bildteil die Form mit einem sogenannten Ladenfalz 12 dargestellt ist, in welchem ein nicht dargestellter Fensterladen in geschlossenem Zustand zu liegen kommt, sind Setzholz 4 und Höhenschenkel 3 im unteren Bereich der Fig. 2 in einer Ausführung dargestellt, die verwendet wird, wenn kein Fensterladen aufgenommen werden muß.

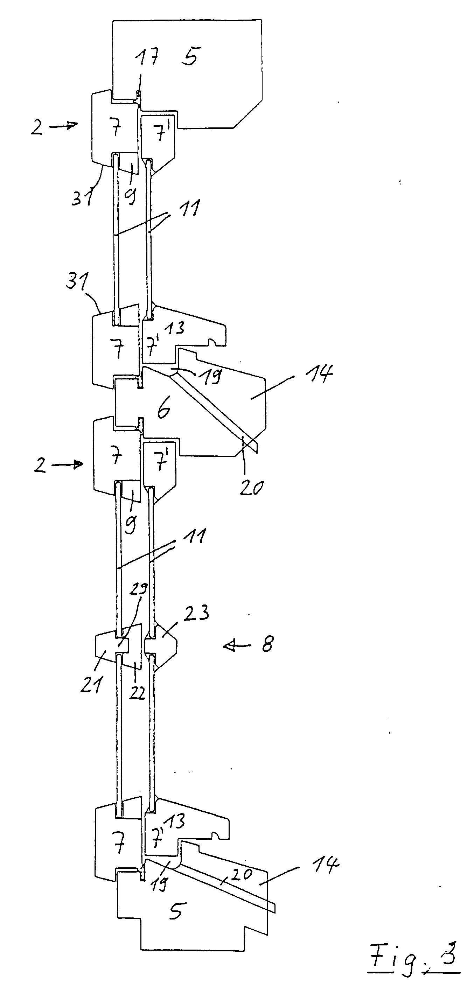

In gleicher Weise, jedoch senkrechtem Schnitt durch die Scheiben 11 zeigt Fig. 3 einen Senkrechtschnitt durch den rechten Teil des Fensters gemäß Fig. 1. in gleicher Weise wie in Fig. 2 ist wiederum der Aufbau der doppelten Fensterflügel 2 zu erkennen und zusätzlich am unteren Teil des jeweils äußeren Rahmens 7' der angearbeitete oder integrierte Wetterschenkel 13 bei jedem Fensterflügel 2. In Fig. 3 ist ferner der waagerecht verlaufende Kämpfer 6 dargestellt, der ebenso wie der untere Schenkel 5 einen einstückig hiermit ausgebildeten Wetterschenkel 14 besitzt, in den unterhalb des äußeren Rahmens 7' jeweils eine Sammelrinne 19 für eingedrungenes Regenwasser sowie als Ablauf und zur Belüftung hierfür eine Ablaufbohrung 20 vorgesehen ist.

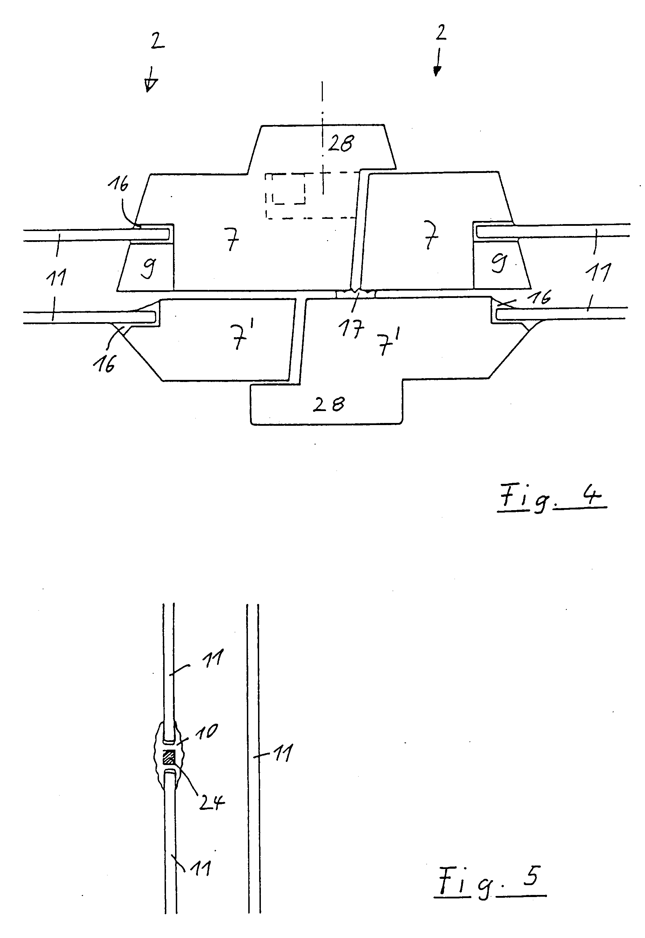

Im Gegensatz zur Fig. 2 zeigt Fig. 4 als waagerechten Schnitt durch den Mittelbereich eines Fensters die Lösung bei einem zweiflügeligen Fenster ohne Mittelholz 4, mit sogenannten Stulpflügeln. Dabei weist derjenige außen liegende Rahmen 7', der zuerst geschlossen wird, eine zusätzliche Schlagleiste 28 auf, die auf der nach außen weisenden Fläche des senkrechten Rahmens 7' aufliegt und auch in Richtung des gegenüberliegenden Flügels 2 vorragt, so daß dadurch ein Falz entsteht, indem der außen liegende Rahmen 7' des anderen Fensterflügels 2 zu liegen kommt. Eine adequate Schlagleiste 28 befindet sich auch auf dem inneren, senkrechten Rahmen 7 des später zu schließenden Fensterflügels 2, welcher wiederum etwas den innen liegenden Rahmen 7 des anderen Fensterflügels 2 überlappt. Eine Profildichtung 17 dichtet die beiden innen liegenden Rahmen 7 gegenüber dem zuerst zu schließenden, außen liegenden Rahmen 7' ab. Diese Konstruktion ermöglicht ein mittiges sitzen der Fensterolive (Griff) im Gegensatz zu modernen rechteckigen Beschlägen.

Im innen liegenden Rahmen 7 des zuletzt zu schließenden Fensterflügels 2 sind strichpunktiert Aussparungen angedeutet, in denen die Beschläge (z.B. verdecktes Baskülgetriebe) für den Fensterflügel 7 angeordnet werden.

Fig. 5 zeigt ferner eine Metallsprosse 10, die zwischen zwei Glasscheiben 11 angeordnet ist. Diese besteht aus einer Bleileiste im Querschnitt eines doppelten U, welche in ihrem Mittelsteg einen stabilisierenden, etwa quadratischen Eisenkern 24 aufweist.

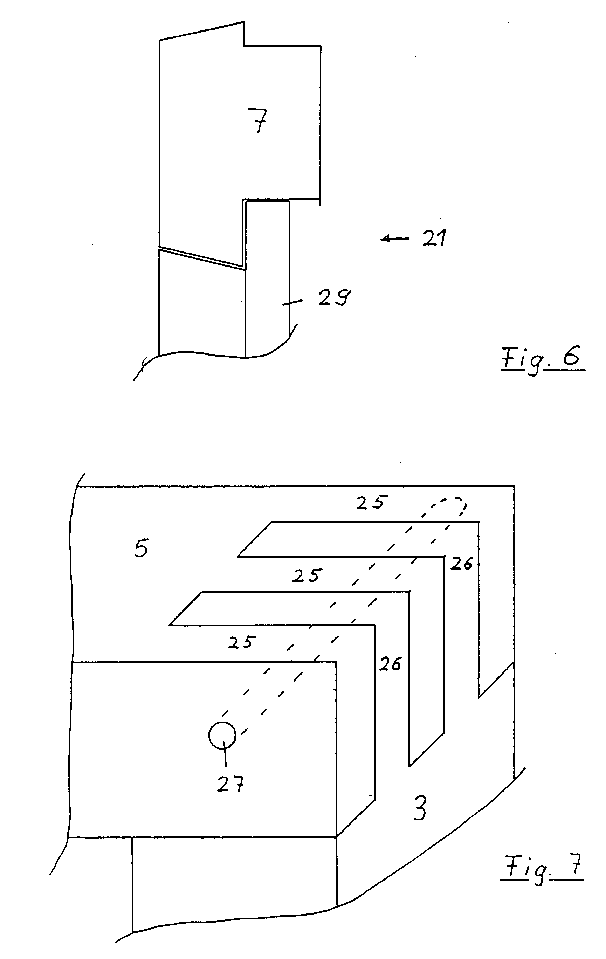

In Fig. 6 ist dargestellt, wie die Holzsprosse 8 der Fig. 3 beim Zusammenbau des Fensters eingesetzt wird: Der Bausatz wird ggfs. mit fertigen Rahmen 7 bzw. 7' für die Fensterflügel 2 geliefert. Eventuelle Sprossen, also Holzsprossen 8 oder Metallsprossen 10, setzt der Käufer nach zusammensetzen des Flügels selbst ein. Wie in Fig. 3 zu erkennen, besteht die Holzsprosse des innen liegenden, immer vorhandenen Rahmens 7 aus zwei Teilen, nämlich den Innenteil 21 und der Überschubleiste 22. Das Innenteil 21 dieser Holzsprosse 8 ist in etwa T-förmig gestaltet, wobei die symmetrische Strebe 29 des T zwischen den beiden zu trennenden Glasscheiben 11 zu liegen kommt.

Die Enden dieses Innenteiles 21 sind dabei so gestaltet, daß diese symmetrische Strebe 29 des Innenteiles 21 in den Falz des Rahmens 7 hineinreicht, in welche später auch die Scheiben 11 eingelegt werden. Dagegen ist der nach innen vorstehende Teil 29 des Innenteiles 21 kürzer abgelenkt, und zwar schräg entsprechend der Schräge 31 der dem Hohlraum des Fensterflügels 2 zugewandten Fläche der Rahmen 7. Diese Schrägen 31 treffen sich in einem außerhalb der Ebene der Scheiben liegenden Fluchtpunkt.

Wie Fig. 6 zeigt, ergibt sich dadurch ein Hintergreifen des Rahmens 7 durch die symmetrische Strebe 29 des Innenteiles 21, so daß dieses Innenteil 21 noch vor den Glasscheiben 11 in den Rahmen 7 eingesetzt werden muß, indem dieses waagerecht zu positionierende Innenteil zunächst schräg in den Hohlraum des Rahmens 7 gehalten und dann in die Waagerechte verdreht wird. In dieser Lage kann das Innenteil 21 nicht mehr durch eine waagerechte Bewegung aus dem Rahmen 7 entnommen werden. Nach Einlegen der Scheiben 7 in die durch Rahmen 7 und Innenteil 21 der Holzsprosse 8 gebildeten Falze werden diese Glasscheiben mit Glaserecken gesichert und gegenüber den Holzteilen abgedichtet und mittels der Halteleisten 9 in den Rahmen 7 gesichert. Zusätzlich wird über den außen über die eingelegten Scheiben 11 vorstehende symmetrische Streben 29 des Innenteiles 21 die Überschubleiste 22 gelegt, die eine Ausnehmung entsprechend dem freien Ende der symmetrischen Strebe 29 besitzt und mit dieser verleimt oder mittels Stiften verbunden werden kann.

In analoger Weise wird auch die einteilige Außensprosse 23 mit einer Hinterschneidung versehen, mit welcher sie in die für das Glas vorgesehenen Falze und Schrägen des äußeren Rahmens 7 eingedreht werden kann und dort aufgrund der Formschlüssigkeit in der waagerechten Position gesichert ist.

Dadurch ist sichergestellt, daß ein und dieselben inneren bzw. äußeren Rahmen 7 bzw. 7' verwendet werden können, unabhängig davon ob Holzsprossen 8 zum Einsatz kommen oder nicht. Gleiches gilt für die Verwendung der in der Fig. 5 dargestellten Metallsprossen 10, welche jedoch wegen ihrer geringen Breite quer zur Ebene der Glasscheiben 11 nur eine geringe Formschlüssigkeit im Rahmen 7 bieten.

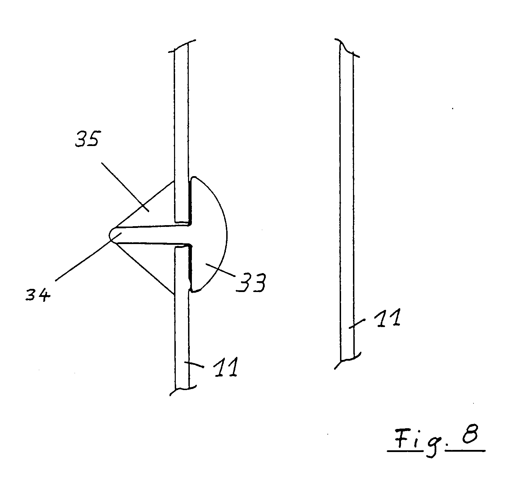

In Fig. 7 ist weiterhin die Verbindung eines waagerechten Schenkels 5 mit einem senkrechten Höhenschenkel 3 dargestellt. Während das eine Bauteil an seinem Ende in Längsrichtung zweimal so eingeschnitten ist, daß jeweils außen und in der Mitte drei grobe Zapfen 25 stehenbleiben (klassische Doppelzapfenverbindung), ist das jeweils andere Teil in Längsrichtung so eingeschnitten, daß genau in der Höhe der Einschnitte des anderen Teiles zwei grobe Zapfen 26 stehenbleiben. Die Zapfen 25 und 26 passen nach bekannter Art bei rechtwinkligem Zusammenstecken von Schenkel 5 und Höhenschenkel 3 ineinander. Im Bereich dieser Zapfen 25 bzw. 26 sind beide Bauteile jeweils separat durch eine Bohrung quer zur Ebene der Zinken 25 und 26 vorgebohrt. Bei einfachem Ineinanderlegen der beiden Bauteile fluchten diese Bohrungen nur bedingt, durch Eintreiben eines am vorderen Ende angeschrägten Holznagels 27 werden die beiden Bohrungen jedoch zur Fluchtung gezwungen, wodurch die freien Enden von Schenkel 5 und Höhenschenkel 3 mit beträchtlichem Druck ineinander gepreßt werden, so daß durch den Leimauftrag zwischen den Zinken 25 und 26 eine innige und feste Verbindung der beiden Bauteile entsteht. Die Bohrung für den Holznagel 27 geht nicht bis zur Außenflächen durch, sondern endet kurz davor als Sackloch, um Witterungseinflüsse auf die stirnseitige Schnittfläche des Holznagels 27 zu vermeiden. Bei einem Durchgangsloch muß wetterfester Leim verwendet werden.

Bevor die beiden Schenkel 5 und Höhenschenkel 3 eines Stockes 1 auf diese Art und Weise verbunden werden, sind selbverständlich auch ein eventuell vorhandenes Mittelholz und Kämpfer 6 dazwischenzusetzen.

Beide werden mittels wenigstens eines über ihre Stirnfläche vorstehenden Zapfen, der den Querschnitt eines an den Schmalseiten halbrund ausgebildeten Rechteckes besitzt, in die sie tragenden Teile, also eine dort als Langloch ausgebildete Ausnehmung, gehalten. Auf diese Art und Weise sitzt das Setzholz 4 oben und unten in den waagerechten Schenkeln 5 und ein Kämpfer 6 links und rechts in dem senkrechten Höhenschenkel 3 bzw. dem senkrechten Setzholz 4.

In den Höhenschenkeln 3 und den Schenkeln 5 sind daher, falls Mittelhölzer und Kämpfer verwendet werden, lediglich diese langlochartigen Ausnehmungen nachträglich einzuarbeiten, so daß für die industrielle Vorfertigung und Lagerung stets die gleichen Einzelteile an Setzhölzern 3 und Schenkeln 5 verwendet werden können, ohne auf die Verwendung von Mittelholz oder Kämpfer achten zu müssen.

Ferner stellen die in Fig. 7 dargestellten Eckverbindungen sowie die Zapfenverbindungen des Mittelholzes und des Kämpfers sicher, daß die durch die lange Lagerung der Einzelteile entstehenden geringen Maßabweichungen der aus Massivholz bestehenden Teile die spätere Montage weder erschweren noch die Paßgenauigkeit negativ beeinträchtigen.

Fig. 8 zeigt eine Metallsprosse ähnlich der der Fig. 5. Die Sprosse besteht dabei aus einem T-förmigen Eisenteil 33, dessen symmetrische Strebe 34 durch die äußeren Scheibe 11 nach außen ragt und dort mit den Scheiben verkittet ist.

## Patentansprüche

1. Bausatz für Holzfenster, insbesondere nach historischen Vorbildern, bestehend aus einem Stock (1) und wenigstens einem, einfachen oder doppelten Fensterflügel (2), wobei die Anzahl der gleich großen verglasten Felder das Höhen- und Breiten-Raster des Fensters ergibt, bestehend aus folgenden Teilen des Stockes (1):
- Setzhölzern (3) und Mittelhölzern (4) in Längen, entsprechend dem Höhenraster der Fenster bis zur gewünschten Maximalhöhe der Fenster,
- Schenkel (5) und Kämpfer (6) in Längen entsprechend dem Breiten-Raster der Fenster bis zur gewünschten Maximalbreite der Fenster,
- wobei die entsprechenden Flächen der miteinander zu verbindenden Teile des Stockes (1) so mit groben Zapfen und Schlitzen (25, bzw. 26) ausgebildet sind, daß sie als Schlitz-und- Zapfen-Verbindung zusammengefügt werden können,
- Rahmen (7) der Fensterflügel (2) in Längen und Breiten entsprechend dem Höhen- und Breiten-Raster der Fenster bis zur gewünschten maximalen Höhe und Breite,
- Halteleisten (9) in Längen entsprechend der Breite und Höhe der Höhlung in den Fensterflügeln (2),
- Holzsprossen (8) und Metallsprossen (10) in Längen entsprechend der Breite einer Höhlung des Fensterflügels (2), wobei in den Rahmen (7) der Fensterflügel (2) keine Ausfräsungen für die Holzsprossen bzw. Metallsprossen vorhanden sind und
- alle Teile ggfs. für die Aufnahme der gewünschten Beschläge vorbereitet sind.

2. Bausatz nach Anspruch 1,
**dadurch gekennzeichnet**, **daß** die Fenster maximal drei Raster hoch und maximal zwei Raster breit, und die Fensterflügel (2) maximal ein Raster breit sind.

3. Bausatz nach Anspruch 1 oder 2,
**dadurch gekennzeichnet**, **daß** die Fensterflügel (2) aus miteinander verbindbarenen, inneren und äußeren Rahmen (7 bzw. 7') bestehen.

4. Bausatz nach Anspruch 1, 2 oder 3, zur Verwendung bei der Herstellung von Verbundfenstern, bei denen der Innenflügel (7) vermittels einer umlaufenden Dichtung am Fensterstock (1) anliegt, wobei sowohl zwischen den fest miteinander verbundenen Außen- und Innenflügeln (7, 7') des Fensters über einen Großteil des Umfanges als auch zwischen Außenflügel (7') und Fensterstock (1) ein mehrere Millimeter breiter Spalt besteht.

5. Bausatz nach einem der vorhergehenden Ansprüche, **dadurch gekennzeichnet**, **daß** die Holzteile des Stockes (1) und der Fensterflügel (2) roh sind.

6. Bausatz nach einem der vorhergehenden Ansprüche, **dadurch gekennzeichnet**, **daß** bei der Verwendung von Isolierglasscheiben nur ein Rahmen (7) verwendet wird, der bereits fertig verglast ist.

## Claims

1. Kit for the construction of wooden windows, particularly following historic models, consisting of a frame (1) and at least one single or double casement (2), wherein the number of glazed zones of equal size produces the height and width grid pattern of the window, consisting of the following parts of the frame (1):
- outer wooden jambs (3) and central wooden jambs (4) in lengths corresponding to the height grid pattern of the window up to the desired maximum height of the window,
- crosspieces (5) and transoms (6) in lengths corresponding to the width grid pattern of the window up to the desired maximum width of the window,
- wherein the corresponding surfaces of the parts of the frame (1) which are to be connected to one another are constructed with rough tenons and mortises (25, 26 respectively) so that they can be assembled as mortise and tenon joints,
- frames (7) of the casements (2) in lengths and widths corresponding to the height and width grid pattern of the window up to the desired maximum height and width,
- retaining strips (9) in lengths corresponding to the width and height of the cavity in the casement (2),
- wooden crossbars (8) and metal crossbars (10) in lengths corresponding to the width of a cavity in the casement (2), no recesses being provided in the frames (7) of the casements (2) for the wooden crossbars or metal crossbars, and
- all parts being prepared if required to receive the desired fittings.

2. Kit according to Claim 1, characterised in that the windows are at most three grids high and at most two grids wide, and the casements (2) are at most one grid wide.

3. Kit according to Claim 1 or 2, characterised in that the casements (2) consist of inner and outer frames (7, 7' respectively) which can be connected to one another.

4. Kit according to Claim 1, 2 or 3, for use in the production of composite windows, in which the inner casement (7) rests by means of a seal running round it on the window frame (1) and there is a gap several millimetres wide both between the outer and inner casements (7, 7') of the window, which are firmly connected to one another, over a large part of the periphery and also between the outer casement (7') and the window frame (1).

5. Kit according to one of the preceding claims, characterised in that the wooden parts of the frame (1) and the casements (2) are rough.

6. Kit according to one of the preceding claims, characterised in that when panes of insulating glass are used only one frame (7) is used which is already ready-glazed.

## Revendications

1. Jeu d'éléments pour la construction de fenêtres en bois, notamment selon des modèles historiques, comprenant un châssis (1) et au moins un battant de fenêtre (2) simple ou double, le nombre des baies vitrées de même grandeur donnant le quadrillage en hauteur et en largeur de la fenêtre, comprenant les parties suivantes du châssis (1) :
- montants de fenêtre (3) et bois centraux (4) dans des longueurs correspondant au quadrillage en hauteur des fenêtres jusqu'à la hauteur maximale des fenêtres,
- dormants (5) et impostes (6) dans des longueurs correspondant au quadrillage en largeur des fenêtres jusqu'à la largeur maximale souhaitée des fenêtres,
- les surfaces correspondantes des parties du châssis (1) à relier étant ainsi constituées avec de gros tenons et des fentes (25 et 26) de telle façon qu'elles puissent être montées comme un assemblage par tenon et mortaise
- cadres (7) des battants (2) dans des longueurs et largeurs correspondant au quadrillage en hauteur et largeur des fenêtres jusqu'à la hauteur et la largeur maximales,
- baguettes d'arrêt (9) dans des longueurs correspondant à la largeur et à la hauteur de la cavité dans les battants (2),
- croisillons en bois et croisillons en métal (10) dans des longueurs correspondant à la largeur d'une cavité du battant (2), moyennant quoi il n'y a pas de fraisures dans les cadres des battants (2) pour les croisillons en bois et les croisillons en métal et
- toutes les parties sont préparées éventuellement pour le logement des ferrures souhaitées.

2. Jeu d'éléments selon la revendication 1, caractérisé en ce que les fenêtres font au maximum trois quadrillages en hauteur et au maximum deux quadrillages en largeur, et les battants (2) au maximum un quadrillage.

3. Jeu d'éléments selon la revendication 1 ou 2, caractérisé en ce que les battants (2) se composent de cadres (7 et 7') intérieurs et extérieurs qui peuvent être reliés entre eux.

4. Jeu d'éléments selon la revendication 1, 2 ou 3, pour utilisation dans la fabrication de fenêtres à vitrage double, sur lesquelles le battant intérieur (7) est collé au châssis (1) au moyen d'un joint périphérique, moyennant quoi il y a une fente large de plusieurs millimètres entre les battants extérieurs et intérieurs (7, 7') reliés de façon fixe sur une grande partie de la périphérie ainsi qu'entre le battant extérieur (7') et le châssis de fenêtre (1).

5. Jeu d'éléments selon l'une des revendications précédentes, caractérisé en ce que les parties en bois du châssis (1) et des battants de fenêtre (2) sont brutes.

6. Jeu d'éléments selon l'une des revendications précédentes, caractérisé en ce qu'on n'utilise qu'un cadre (7) qui est déjà tout vitré pour l'utilisation de vitres en verre isolant.
